# EUROPÄISCHE PATENTSCHRIFT

(11) **EP 2 076 783 B1**
(45) Veröffentlichungstag und Bekanntmachung des Hinweises auf die Patenterteilung: **05.07.2017**
(21) Anmeldenummer: 07821240.4
(22) Anmeldetag: 12.10.2007
(51) Int. Cl.: G01P 15/125, G01P 15/18, G01P 15/08

(54) **SENSOR ZUR ERFASSUNG VON BESCHLEUNIGUNGEN**
SENSOR FOR DETECTING ACCELERATION
CAPTEUR POUR DÉTECTER DES ACCÉLÉRATIONS

(30) Priorität: 12.10.2006 DE 102006048381
(43) Veröffentlichungstag der Anmeldung: 08.07.2009
(73) Patentinhaber: Fraunhofer-Gesellschaft zur Förderung der angewandten Forschung e.V., 80686 München (DE); Maxim Integrated GmbH, 8403 Lebring (AT)
(72) Erfinder: SCHWARZELBACH, Oliver, 25524 Itzehoe (DE); WEISS, Manfred, 25524 Itzehoe (DE); KEMPE, Volker, A-8501 Lieboch (AT)
(74) Vertreter: Strehl Schübel-Hopf & Partner
(86) Internationale Anmeldenummer: PCT/EP2007/060873
(87) Internationale Veröffentlichungsnummer: WO 2008/043831

(56) Entgegenhaltungen:
- WO-A-2005/098358
- US-A1- 2004 055 382
- US-A1- 2005 005 698
- US-A1- 2006 213 268
- SELVAKUMAR A ET AL: "A high sensitivity z-axis torsional silicon accelerometer" ELECTRON DEVICES MEETING, 1996., INTERNATIONAL SAN FRANCISCO, CA, USA 8-11 DEC. 1996, NEW YORK, NY, USA,IEEE, US, 8. Dezember 1996 (1996-12-08), Seiten 765-768, XP010207653 ISBN: 0-7803-3393-4

## Beschreibung

Die vorliegende Erfindung betrifft einen Sensor zur Erfassung von Beschleunigungen in einer oder zwei Achsrichtungen, insbesondere einen mikromechanischen Sensor.

Derartige mikromechanische Sensoren sind zur Erfassung von Beschleunigungen sowohl rotatorischer als auch translatorischer Bewegungen bekannt. Sie werden gewöhnlicherweise mit Hilfe klassischer Ätztechniken aus einem Wafer beispielsweise aus Silizium hergestellt und weisen im Allgemeinen ein eine tragende Struktur bildendes Substrat auf, das bei einem bestimmungsgemäßen Einsatz des Beschleunigungssensors meist fest mit einem System verbunden ist, dessen Beschleunigung zu erfassen ist. Das Substrat bildet für den Sensor in der Regel das Bezugssystem aus, dessen Beschleunigung festzustellen ist. Mit dem Substrat ist mittels einer Befestigungsstruktur eine Masseeinheit elastisch verbunden, die symmetrisch oder asymmetrisch angeordnet sein kann. Im ersten Falle kann sie beispielsweise über Federn zentrisch an vier außenliegenden Ankern aufgehängt sein, siehe H. Lakdawala et al., J. Micromech. and Microeng. 14 (2004) 559-566. Im letzteren Fall ist wenigstens eine Schwenkachse definiert, um die die Masseeinheit aufgrund einer auf den Sensor wirkenden Beschleunigung relativ zum Substrat eine Rotation ausführt. Die Masseeinheit ist dann so ausgebildet, dass sie einen von der jeweiligen Schwenkachse distanzierten Trägheitsschwerpunkt aufweist. Der Sensor weist des Weiteren in allen Fällen wenigstens eine Detektionseinheit auf, mit der eine aufgrund einer auf den Sensor wirkenden Beschleunigung hervorgerufene Lageänderung zwischen der Masseeinheit und dem Substrat erfassbar ist.

Der von der Schwenkachse distanzierte Trägheitsschwerpunkt der Masseeinheit kann beispielsweise dadurch ausgebildet sein, dass die Masseeinheit zur Schwenkachse achsasymmetrisch geformt ist oder aus Materialien unterschiedlicher Dichte besteht. Die Masseeinheit ist in herkömmlicher Weise mittels einer aus balkenartigen Bestandteilen des Wafers gebildeten Rahmenstruktur mit den entsprechenden Detektionseinheiten verbunden.

In nachteiliger Weise unterliegt die die träge Masse ausbildende Masseeinheit aufgrund ihrer asymmetrischen Form bzw. eines unterschiedlichen Dehnungsverhaltens gegebenenfalls vorhandener unterschiedlicher Materialien oder Abdeckschichten einem verhältnismäßig starken, formspezifischen thermischen Dehnungsverhalten. Des Weiteren können in dem Wafer- oder sonstigen Material fertigungstechnisch bedingte Spannungen vorliegen, die durch die Formgebung des Sensors freigesetzt werden (siehe H. Lakdawala, a.a.O.). Das bedeutet, dass die Form der Masseeinheit von ihrer für eine genaue Erfassung von Beschleunigungen erforderlichen Form abweicht, was insbesondere bei einem Vorliegen von Temperaturschwankungen verstärkt wird. Die Masseeinheit dehnt sich dabei meist nicht gleichmäßig, stattdessen unterscheiden sich die auftretenden Dehnungen in verschiedenen Bereichen stark. Die inneren Spannungen sowie das formspezifische thermische Dehnungsverhalten der Masseeinheit führen daher insbesondere zu einem Verwinden bzw. Verziehen derselben, wobei sie sich teilweise deutlich aus der Haupterstreckungsebene des Sensors heraus biegen kann.

In nachteiliger Weise werden die ungleichmäßigen Formänderungen oder Dehnungen von der Masseeinheit durch die Struktur, mit der diese mit den übrigen Einheiten des Sensors verbunden ist, auf diese und insbesondere auf die Detektionseinheiten zur Erfassung der Lageänderung zwischen der Masseeinheit und dem Substrat übertragen. Es kommt daher zu teilweise deutlichen Messungenauigkeiten sowie temperaturabhängigen Messdifferenzen. Diese sind insbesondere bei Beschleunigungssensoren störend, die einer Erfassung von geringen Beschleunigungen dienen. In Abhängigkeit des jeweils verwendeten Materials und der besonderen Ausgestaltung der Struktur des Sensors kann es dabei auch bei Beschleunigungen von 0 G zu starken Schwankungen über den gesamten Temperaturbereich hinweg kommen, wodurch ein Abgleich des Sensors nahezu unmöglich ist.

Bei den in US 2005/005698 A1 offenbarten Sensoren bildet eine Masseeinheit selbst einen Teil der Detektionseinheiten aus (siehe beispielsweise Fig. 4). Als "sensing fingers" bezeichneten Teilbereiche der Masseeinheit wirken mit festen Fingern zusammen, die auf einem Substrat ortsfest angeordnet sind.

US 2006/213268 A1 offenbart einen Sensor, bei dem eine Masseeinheit Teilbereiche von Detektionseinheiten ausbildet. Diese bestehen aus bewegbaren Elektroden, die in Zwischenräume zwischen fest auf einem Substrat angeordnete feste Elektroden eingreifen. Die Masseeinheit ist aufgrund ihres Gewichtsabschnittes asymmetrisch geformt und mittels asymmetrisch zur Masse angeordneten Ankerabschnitten am Substrat angelenkt.

US 2004/055382 A1 offenbart einen Sensor mit einer bewegliche Elektrodenfinger aufweisenden Masseeinheit. Die Elektrodenfinger bilden mit fest auf einem Substrat angeordneten Elektrodenfingern eine Detektionseinheit, so dass sich Verformungen der Masseeinheit unmittelbar auf die Detektionseinheiten auswirken. Zur Verringerung von Abweichungen beispielsweise auf Grund von Montageprozessen oder Temperaturänderungen in Form von Änderungen der relativen Position der Masse und der mit dieser zusammenwirkenden Erfassungseinheiten wird vorgeschlagen, die Erfassungseinheiten möglichst nahe am Ankerpunkt der Masse anzuordnen, so dass mechanische Belastungen dazu führen, dass sich die masseseitigen Bereiche der Detektionseinheiten im Wesentlichen gleich bewegen wie deren substratseitige Bereiche.

In WO 2005/098358 A wird ein Rotations-Drehratensensor mit mechanisch entkoppelten Schwingungsmoden offenbart.

Ausgehend von dem zuvor beschriebenen Stand der Technik und dessen Nachteilen liegt der vorliegenden Erfindung die Aufgabe zugrunde, einen Sensor zur Erfassung von Beschleunigungen, insbesondere einen mikromechanischen Sensor der eingangs genannten Art zu schaffen, bei dem Messwertschwankungen insbesondere aufgrund eines Freiwerdens von inneren Spannungen sowie eines Auftretens von temperaturbedingten ungleichmäßigen Dehnungen weitgehend vermieden werden können. In bevorzugten Ausführungsformen soll der Sensor die Beschleunigung in zwei aufeinander senkrecht stehenden Achsen erfassen können.

Diese Aufgabe wird durch einen erfindungsgemäßen Sensor gemäß dem Oberbegriff des Anspruchs 1 gelöst, der dadurch gekennzeichnet ist, dass die Masseeinheit einen zu jeder Schwenkachse achssymmetrisch geformten, in einer Aussparung der Masseeinheit angeordneten Lagerbereich aufweist, an dem die Befestigungsstruktur und wenigstens eine Detektionseinheit angeordnet sind, wobei der Lagerbereich und die Masseeinheit mittels eines steifen, stab-oder balkenförmigen Elementes miteinander verbunden sind, dessen Längsachse mit einer Schwenkachse zusammenfällt, und die Detektionseinheit derart bezüglich der Masseeinheit angeordnet ist, dass eine Verformung der Masseeinheit nicht auf die Detektionseinheit übertragbar ist.

Der erfindungsgemäße Sensor ist in vorteilhafter Weise zur Erfassung sowohl translatorischer als auch rotatorischer Beschleunigungen geeignet. Durch die erfindungsgemäße Anordnung der Detektionseinheit an der Masseeinheit wird eine Entkopplung der einem ungleichmäßigen Verformungsverhalten unterliegenden Masseeinheit von den übrigen Einheiten des Sensors erzielt. Unter einer Entkopplung in diesem Sinne ist zu verstehen, dass die Masseeinheit so mit der Detektionseinheit verbunden ist, dass sich ungleichmäßige Verformungen der Masseeinheit nicht derart auf die übrigen Bereiche des erfindungsgemäßen Sensors auswirken, dass die Messergebnisse hierdurch soweit beeinflusst oder sogar verfälscht werden, dass sie als unbrauchbar oder zumindest ungenau zu verwerfen wären.

Unter einer Schwenkachse im Sinne der vorliegenden Erfindung ist eine gedachte Raumachse zu verstehen, um die sich die Masseeinheit drehen kann. Die jeweilige Schwenkachse muss nicht körperlich beispielsweise in Form einer Scharnierachse oder eines oder mehrerer Lagerstrukturen wie Zapfen und dergleichen ausgebildet sein, kann allerdings unter Umständen durch solche körperlichen Lagerstrukturen gebildet sein bzw. mit ihnen zusammenfallen. Vorzugsweise ist die jeweilige Schwenkachse durch eine geeignete Anordnung und Auswahl der Befestigungsstruktur definiert, indem diese eine Federanordnung umfasst, die in Richtung der zu erfassenden Beschleunigungen auslenkbar und im Übrigen im Wesentlichen biegesteif ist.

Das Substrat des erfindungsgemäßen Sensors ist eine in beliebiger Weise geeignet ausgebildete mechanische Einheit, die mit dem System, dessen Beschleunigungen erfasst werden sollen, direkt oder indirekt verbunden ist, so dass die auf das System wirkenden Beschleunigungen zumeist im wesentlichen unverfälscht auf das Substrat übertragen werden. Das Substrat bildet somit den mit den übrigen Funktionseinheiten des Sensors verbundenen Bezugspunkt des zu messenden Systems aus. Vorzugsweise ist das Substrat ein Teil einer aus einem Wafer geformten Struktur, die die übrigen Funktionseinheiten des Sensors trägt.

Nach einer vorteilhaften Ausführungsform der Erfindung ist die Masseeinheit in Form eines scheibenförmigen Elementes ausgebildet. Unter einem scheibenförmigen Element im Sinne der Erfindung ist ein Element zu verstehen, das sich im Wesentlichen in zwei zueinander orthogonale Raumrichtungen erstreckt, während seine Ausdehnung in einer dritten, zu den beiden erstgenannten Raumrichtungen orthogonalen Richtung vernachlässigbar klein ist. Eine solche Masseeinheit ist besonders gut als mikromechanisches Element aus einem Wafer des jeweils gewünschten Materials oder der jeweils gewünschten Materialkombination unter Verwendung herkömmlicher Ätztechniken herstellbar. Das Element ist besonders gut in einem als Chip aus einem Wafer hergestellten Sensor verwendbar. Die scheibenförmige Masseeinheit ist derart ausgebildet, dass sie Formänderungen ausführen kann, ohne dass diese unabhängig von der Anordnung der Detektionseinheit auf diese übertragen werden oder in diese eingeleitet werden und dort zu einer möglichen Verformung führen können.

Mit der Erfindung wird des Weiteren vorgeschlagen, dass die Masseeinheit zu jeder Schwenkachse achsasymmetrisch ausgebildet ist. Eine solche Masseeinheit ist besonders einfach mit einem von der jeweiligen Schwenkachse distanzierten Trägheitsschwerpunkt als flächige Einheit herstellbar. Die Distanz des Trägheitsschwerpunktes von der Schwenkachse wird in vorteilhafter Weise lediglich von der geometrischen Formgebung der Masseeinheit bestimmt, wodurch keine zusätzliche und gegebenenfalls zusätzliche Kosten verursachende Maßnahmen wie eine Verwendung von Materialien mit einer höheren Dichte oder einer höheren Dicke erforderlich sind.

Die Masseeinheit weist einen zu jeder Schwenkachse achssymmetrisch geformten Lagerbereich auf, an dem die Befestigungsstruktur und wenigstens eine Detektionseinheit angeordnet sind. Da der Lagerbereich zu den jeweiligen Schwenkachsen achssymmetrisch aufgebaut ist, unterliegt er im Wesentlichen keinen ungleichmäßig über den Lagerbereich auftretenden und auf das Substrat sowie die Detektionseinheit übertragbaren Verformungen, die zu einer Verfälschung der Messergebnisse führen könnten. Es sei unter diesem Gesichtspunkt darauf hingewiesen, dass der Lagerbereich nicht in sämtliche Raumrichtungen symmetrisch ausgebildet sein muß. Es genügt vielmehr, ihn derart symmetrisch auszubilden, dass aus einer Asymmetrie resultierende Verformungen nicht auf die Detektionseinheit übertragen werden.

Des Weiteren weist die Masseeinheit eine Aussparung auf, in der der Lagerbereich angeordnet ist. Vorzugsweise ist die Aussparung derart in die Masseeinheit eingebracht, dass sie von einer geschlossenen Rahmenstruktur umgeben ist, die von dem um die Ausnehmung verbleibenden Material der Masseeinheit gebildet ist. Die diesen Rahmen bildenden Strukturen können einerseits als Befestigungsstruktur für eine Anbringung der Masseeinheit an die verbleibenden Baueinheiten des Sensors dienen und können des weiteren eine federnde Struktur ausbilden, mit deren Hilfe Spannungen und Verformungen der Masseeinheit abgebaut werden. Aufgrund der geschlossenen Rahmenstruktur besitzt die Masseeinheit eine hohe Stabilität, die Verformungen insbesondere in Richtung der ebenen Ausdehnung der Masseeinheit vermindert. Die soweit wie möglich gehende symmetrische Ausbildung der Masseeinheit und deren Rahmenstruktur wirkt einem asymmetrischen Verformungsverhalten wie einem Verdrehen oder Verwinden aus der Ebene des Wafers heraus wirksam entgegen.

Der Lagerbereich und die Masseeinheit sind mittels eines steifen, stab- oder balkenförmigen Elementes miteinander verbunden. Dieses balkenförmige Element ist mit der Masseeinheit vorzugsweise an deren die Ausnehmung umgebenden Rahmenstruktur verbunden, so dass Verformungen und Spannungen der Masseeinheit nicht oder nur weitgehend vermindert in das balkenförmige Element eingebracht werden können. Das balkenförmige Element ist derart ausgebildet, dass lediglich aufgrund der Massenträgheit hervorgerufene Lageänderungen der Masseeinheit auf die Detektionseinheit übertragen werden können, während gleichzeitig eine Übertragung von Verformungen und Spannungen der Masseeinheit verhindert bzw. zumindest wesentlich eingeschränkt wird.

In besonders vorteilhafter Weise ist die Befestigungsstruktur so an dem Substrat angeordnet, dass durch eine Überschneidung zweier zueinander orthogonaler Schwenkachsen ein Ankerpunkt definiert ist, um den die Masseeinheit mit zwei Freiheitsgraden rotierbar ist. Ein derartiger Sensor ist dazu geeignet, sowohl translatorische als auch rotatorische Beschleunigungskomponenten in zwei zueinander orthogonale Richtungen zu erfassen. Darüber hinaus kann die Lagerung der gegenüber dem Substrat bei Wirken einer Beschleunigung bewegten Funktionseinheiten an dem Substrat in besonders einfacher und robuster Weise ausgebildet werden. Eine Einschränkung der Beweglichkeit der Masseeinheit gegenüber dem Substrat wird weitestgehend vermieden.

Um einen zuvor beschriebenen Sensor als insbesondere mikromechanischen Zwei-Achsenbeschleunigungssensor auszubilden, weist der Sensor wenigstens eine Detektionseinheit, mit der eine aufgrund einer in eine erste Richtung wirkenden Beschleunigung des Sensors hervorgerufene Lageänderung zwischen der Masseeinheit und dem Substrat erfassbar ist, und wenigstens eine weitere Detektionseinheit auf, mit der eine aufgrund einer in eine zweite Richtung wirkenden Beschleunigung des Sensors hervorgerufene Lageänderung zwischen der Masseeinheit und dem Substrat erfassbar ist.

Gemäß der Erfindung wird weiterhin vorgeschlagen, dass die oder mindestens eine Detektionseinheit bzw. alle Detektionseinheiten an dem Lagerbereich angeordnet ist bzw. sind, da Formänderungen der Masseeinheit nicht direkt auf den Lagerbereich und die mit diesem verbundene bzw. verbundenen Detektionseinheit(en) übertragen werden und auf diese Weise keine der Detektionseinheiten durch eine solche Formänderung negativ beeinflusst wird. Verfälschungen der mit dem Sensor ermittelten Messergebnisse werden somit weitgehend vermieden.

Es ist allerdings ebenfalls möglich, dass wenigstens eine Detektionseinheit an der Rahmenstruktur der Masseeinheit angeordnet ist. In diesem Fall ist dafür Sorge zu tragen, dass die Detektionseinheit dort derart angeordnet ist, dass ggf. auftretende Verformungen der Masseeinheit nicht zu einer nachteiligen Beeinflussung der Detektionseinheit führen können. Zu diesem Zweck wird mit der vorliegenden Erfindung vorgeschlagen, dass die jeweilige Detektionseinheit symmetrisch zu der Aussparung an dem diese umgebenden Rand angeordnet ist.

In besonders vorteilhafter Weise sind an dem Lagerbereich und/oder der Rahmenstruktur der Masseeinheit jeweils zwei Detektionseinheiten vorzugsweise einander gegenüber liegend angeordnet, um Lageänderungen der Masseeinheit in eine Richtung zu erfassen. Die Detektionseinheiten sind messtechnisch so miteinander verschaltet, dass sich ihre Messsignale summieren und sich so besonders für eine messtechnische Verarbeitung eignen.

Bei den Detektionseinheiten handelt es sich vorzugsweise um kapazitive Messeinheiten, die beispielsweise in Form von aus Elektrodenkämmen ausgebildeten Differentialkondensatoren gebildet sind.

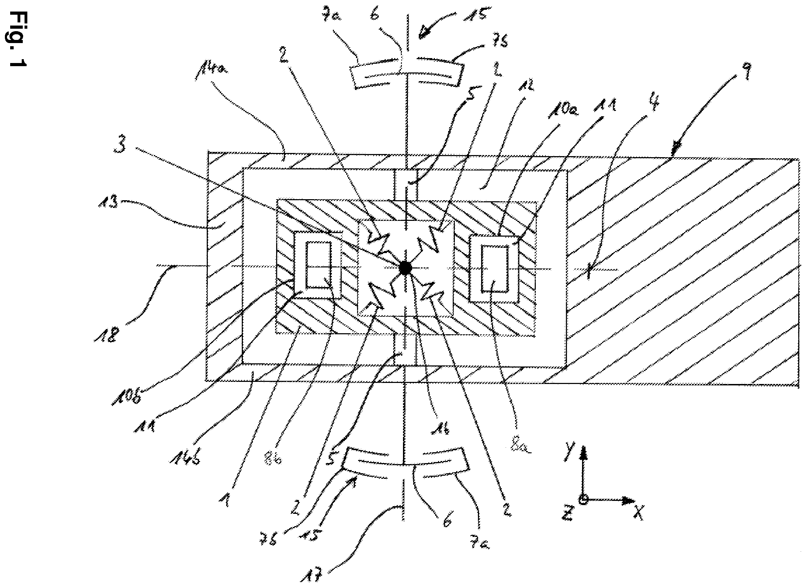

Weitere Merkmale und Vorteile der Erfindung ergeben sich aus den Unteransprüchen sowie der nachfolgenden, nicht beschränkenden Beschreibung einer besonders bevorzugten Ausführungsform anhand der Figur 1, in der ein erfindungsgemäßer Zwei-Achsenbeschleunigungssensor schematisch dargestellt ist. Zum Zwecke einer einfacheren Beschreibung und eines besseren Verständnisses ist in der Figur ein kartesisches Koordinatensystem dargestellt, auf welches bei der folgenden Beschreibung des Sensors Bezug genommen wird.

Der dargestellte Beschleunigungssensor umfasst eine Masseeinheit 9, die mittels Biegefedern 2 mit einem eine tragende Struktur ausbildenden Substrat 3 verbunden ist. Das Substrat 3 wiederum ist, obwohl dies in der Figur nicht dargestellt ist, fest mit einer beliebigen Einheit verbunden, deren Beschleunigungen mittels des dargestellten Sensors zu erfassen sind.

Die Masseeinheit 9 ist ein flaches, scheibenartiges Element, das sich im Wesentlichen in Richtung der X- und Y-Achse erstreckt und dessen Ausdehnung in Richtung der Z-Achse gegenüber den vorgenannten Abmessungen vernachlässigbar klein ist. Sie ist mit einer bezüglich ihrer Gesamtgestalt asymmetrisch, dass heißt außermittig angeordneten Aussparung 12 versehen. Diese ist von einem einen geschlossenen Rahmen ausbildenden Randbereich 13 umgeben. Aufgrund der asymmetrischen Anordnung der Ausnehmung 12 ist die Masseeinheit 9 relativ zu dem Substrat 3 und bezogen auf die y-Achse und die Z-Achse achsasymmetrisch ausgebildet, weshalb ihr Trägheitsschwerpunkt 4 von jeder der durch den Kreuzungspunkt 16 der vier Biegefedern 2 verlaufenden Schwenkachsen 18 (in Z-Richtung) und 17 (in Y-Richtung) distanziert ist. Bezüglich der X-Achse ist die Masseeinheit 9 achssymmetrisch ausgebildet, ihr Trägheitsschwerpunkt 4 liegt daher auf der X-Achse. An den sich gegenüberliegenden Seitenstrukturen 14a und 14b des Randbereiches 13 ist jeweils mittig der Seitenstrukturen 14a und 14b ein Elektrodenkamm 6 angeordnet. Die Elektrodenkämme 6 bilden mit externen Elektrodenkämmen 7a, 7b einen Differentialkondensator 15 aus. Die externen Elektrodenkämme 7a, 7b sind relativ zu dem Substrat 3 ortsfest und nicht verschiebbar angeordnet.

Die Masseeinheit 9 weist des Weiteren einen innerhalb der Ausnehmung 12 angeordneten Lagerbereich 1 auf. Dieser besitzt zwei Aussparungen 10a und 10b, in denen jeweils eine Gegenelektrode 8a, 8b angeordnet ist. Der Lagerbereich 1 ist hinsichtlich aller drei Achsen des in der Figur verwendeten Koordinatensystems achssymmetrisch ausgebildet, weshalb sein Trägheitsschwerpunkt im Schnittpunkt 16 der Schwenkachsen 17 und 18 liegt. Die Gegenelektroden 8a, 8b sind gegenüber dem Substrat 3 ortsfest und nicht beweglich. Der Lagerbereich 1 bildet zusammen mit den Gegenelektroden 8a, 8b einen Differentialkondensator 11 aus. Lageänderungen der Gegenelektroden 8a,8b relativ zu der Lagereinheit 1 führen zu einer Veränderung der Differentialkapazitäten des Differentialkondensators 11, die von einer geeigneten, in der Figur nicht dargestellten Schaltung in eine beschleunigungsproportionale Spannung umgewandelt werden kann.

Im Folgenden wird die Funktionsweise des in der Figur dargestellten Zwei-Achsenbeschleunigungssensors erläutert.

Der dargestellte Zwei-Achsenbeschleunigungssensor dient einer Erfassung von Beschleunigungen, die Richtungsanteile in Richtung der Y- und/oder der Z-Achse besitzen. Durch den dargestellten Sensor können Beschleunigungsanteile in Richtung der X-Achse nicht erfasst werden. Um derartige Beschleunigungsanteile zu erfassen, wird vorteilhafterweise ein entsprechender zweiter Sensor verwendet, der gegenüber dem dargestellten Beschleunigungssensor um 90° gedreht ist.

Sobald auf den den Sensor tragenden Gegenstand, der mit diesem über das Substrat 3 fest verbunden ist, eine Beschleunigung in Richtung der Y-Achse wirkt, bewirkt die Masseeinheit 9 aufgrund ihrer hinsichtlich des Schnittpunktes 16 der Schwenkachsen 17 und 18 dezentralen Massenverteilung eine Rotation des gesamten Sensors mit Ausnahme des Substrates 3 um den Schnittpunkt 16. Eine diesbezügliche Rotation um das Substrat 3 ist aufgrund der in diese Richtung wirkenden federnden Eigenschaften der Biegefedern 2 möglich. Das aufgrund der dezentralen Masseverteilung um den Schnittpunkt 16 wirkende Drehmoment ist direkt proportional zur Größe der wirkenden Beschleunigung. Diesem Drehmoment wirkt die durch die Biegefedern 2 auf den Lagerbereich 1 ausgeübte Rückstellkraft, die direkt proportional zur vorliegenden Auslenkung ist, entgegen. Aus dem Maß der unter einer bestimmten Beschleunigung vorliegenden Lageänderung bzw. Verdrehung des Lagerbereiches 1 gegenüber dem Substrat 3 kann somit ein direkter Rückschluss auf die Größe der jeweils wirkenden Beschleunigung gezogen werden.

Die aufgrund einer Beschleunigung in Richtung der Y-Achse erfolgende Verdrehung des Lagerbereiches 1 gegenüber dem Substrat 3 führt zu einer Verschiebung der Elektrodenkämme 6 gegenüber den externen Elektrodenkämmen 7a, 7b. Diese Verschiebung führt zu einer Veränderung der Differentialkapazitäten des Differentialkondensators 15, die von einer geeigneten Schaltung in eine beschleunigungsproportionale Spannung umgewandelt werden kann, die wiederum zur Bestimmung der Größe der jeweils vorliegenden Beschleunigung herangezogen wird.

Bei einer ausschließlich in Richtung der Y-Achse wirkenden Beschleunigung stellt die zuvor beschriebene Bewegung die einzelne relative Verschiebung zwischen dem Substrat 3 und der Masseeinheit 1 dar. Eine derartige Beschleunigung führt somit nicht zu einer relativen Verschiebung der Gegenelektroden 8a, 8b bezüglich der Lagereinheit 1.

Sobald eine Beschleunigung in Z-Richtung auf den Sensor wirkt, wird die Masseeinheit 9 aufgrund ihrer dezentralen Massenverteilung eine Rotation um die Y-Achse des durch das Substrat 3 und die Biegefedern 2 gebildeten und mit dem Schnittpunkt 16 deckungsgleichen gemeinsamen Ankerpunktes bewirken. Aufgrund der mittels des Verbindungsbalkens 5 bewirkten verdrehfesten Verbindung des Lagerbereiches 1 mit der Masseeinheit 4 führt der Lagerbereich 1 in gleicher Weise eine Rotation um die Y-Achse des gemeinsamen Ankerpunktes durch. Aufgrund dieser Rotation kommt es zu einer relativen Verschiebung der Gegenelektroden 8a, 8b innerhalb der in der Lagereinheit 1 gebildeten Aussparungen 10a, 10b. Wie bereits zuvor im Zusammenhang mit einer Beschleunigung in die Y-Richtung erläutert wurde, kommt es auch hier bei einer lediglich in die Z-Richtung wirkenden Beschleunigung nicht zu einer Verschiebung der Elektrodenkämme 6 relativ zu den externen Elektrodenkämmen 7a, 7b.

Wie in der Figur gut zu erkennen ist, ist der Lagerbereich 1 bezüglich der beiden Differentialkondensatoren 11 und 15 symmetrisch ausgebildet. Bei Temperaturänderungen dehnt sich dieser im Allgemeinen derart symmetrisch aus, dass es aufgrund dieser thermischen Dehnungen nicht zu einem Verschieben der Elektrodenkämme 6 gegenüber den externen Elektrodenkämmen 7a, 7b bzw. den Gegenelektroden 8a, 8b gegenüber dem Lagerbereich 1 kommt.

Sollte hingegen der achsasymmetrische Außenbereich der Masseeinheit 9 bei Temperaturschwankungen thermischen Dehnungen unterliegen, wären diese gemäß der ungleichmäßigen Masseverteilung und der asymmetrischen Form nicht gleichmäßig über die Masseeinheit 9 verteilt. Aufgrund dieser variierenden und gestaltspezifischen thermischen Dehnungen könnte es bei Temperaturänderungen zu Formänderungen kommen. Insbesondere könnte eine Wölbung um die Y-Achse aus der Zeichenebene heraus, d.h. in Richtung der Z-Achse erfolgen. Derartige Verformungen werden aufgrund der mittels des steifen Balkens 5 erstellten Verbindung zwischen der Rahmenstruktur der Masseeinheit 9 und der Lagereinheit 1 nicht auf die Letztere übertragen und können somit nicht zu einer relativen Verschiebung der Gegenelektroden 8a, 8b gegenüber dem Lagerbereich 1 führen. Gleiches gilt für den aus den Elektrodenkämmen 6 und den externen Elektrodenkämmen 7a, 7b gebildeten Differentialkondensator 15.

### Bezugszeichenliste

- 1: Lagerbereich
- 2: Biegefedern
- 3: Substrat (Anker)
- 4: Trägheitsschwerpunkt
- 5: Balken
- 6: Elektrodenkämme
- 7a,7b: externe Elektrodenkämme
- 8a,8b: Gegenelektroden
- 9: Masseeinheit
- 10a,10b: Aussparung
- 11: Differentialkondensator
- 12: Aussparung
- 13: Wandbereich
- 14a,14b: Seitenstruktur
- 15: Differentialkondensator
- 16: Schnittpunkt der Schwenkachsen
- 17: Schwenkachse in Y-Richtung
- 18: Schwenkachse in Z-Richtung

## Patentansprüche

1. Sensor zur Erfassung einer auf den Sensor wirkenden Beschleunigung, aufweisend:
ein Substrat (3),
eine bei Vorliegen einer Beschleunigung als träge Masse wirkende Masseeinheit (9),
eine Befestigungsstruktur (2, 1, 5), mittels der die Masseeinheit an dem Substrat angelenkt ist, wobei die Masseeinheit
- so an dem Substrat angelenkt ist, dass wenigstens eine Schwenkachse (y;z) definiert ist, um die die Masseeinheit aufgrund einer auf den Sensor wirkenden Beschleunigung relativ zu dem Substrat eine Rotation ausführen kann,und
- einen von der jeweiligen Schwenkachse distanzierten Trägheitsschwerpunkt (4) aufweist,
und wenigstens eine Detektionseinheit (11; 15), mit der eine Lageänderung zwischen der Masseeinheit und dem Substrat erfassbar ist,
**dadurch gekennzeichnet, dass**
- die Masseeinheit einen zu jeder Schwenkachse achssymmetrisch geformten, in einer Aussparung (12) der Masseeinheit angeordneten Lagerbereich (1) aufweist, an dem die Befestigungsstruktur und wenigstens eine Detektionseinheit angeordnet sind, wobei der Lagerbereich und die Masseeinheit mittels eines steifen, stab-oder balkenförmigen Elementes (5) miteinander verbunden sind, dessen Längsachse mit einer Schwenkachse (17) zusammenfällt, und
- die Detektionseinheit derart bezüglich der Masseeinheit angeordnet ist, dass eine Verformung der Masseeinheit nicht auf die Detektionseinheit übertragbar ist.

2. Sensor nach Anspruch 1, **dadurch gekennzeichnet, dass** die Masseeinheit durch ein scheibenförmiges Element ausgebildet ist.

3. Sensor nach Anspruch 1 oder 2, **dadurch gekennzeichnet, dass** die Masseeinheit zu jeder Schwenkachse achsasymmetrisch geformt ist.

4. Sensor nach einem der voranstehenden Ansprüche, **dadurch gekennzeichnet, dass** er wenigstens eine Detektionseinheit, mit der eine aufgrund einer in eine erste Richtung wirkenden Beschleunigung des Sensors hervorgerufene Lageänderung zwischen der Masseeinheit und dem Substrat erfassbar ist, und wenigstens eine weitere Detektionseinheit, mit der eine aufgrund einer in eine zweite Richtung wirkenden Beschleunigung des Sensors hervorgerufene Lageänderung zwischen der Masseeinheit und dem Substrat erfassbar ist, aufweist.

5. Sensor nach einem der voranstehenden Ansprüche, **dadurch gekennzeichnet, dass** wenigstens eine Detektionseinheit an der Masseeinheit mittig an dem die Aussparung umgebenden Rand (14a; 14b) angeordnet ist.

6. Sensor nach Anspruch 5, **dadurch gekennzeichnet, dass** die genannte Detektionseinheit einer Erfassung von Lageänderungen in der Ebene der Masseeinheit dient.

7. Sensor nach einem der voranstehenden Ansprüche, **dadurch gekennzeichnet, dass** die wenigstens eine an dem Lagerbereich (1) angeordnete Detektionseinheit einer Erfassung von Lageänderungen orthogonal zu der Ebene der Masseeinheit dient.

8. Sensor nach einem der voranstehenden Ansprüche, **dadurch gekennzeichnet, dass** die Befestigungsstruktur so an dem Substrat angeordnet ist, dass durch eine Überschneidung zweier zueinander orthogonaler Schwenkachsen (17, 18) ein Ankerpunkt definiert ist, um den die Masseeinheit mit zwei Freiheitsgraden rotierbar ist.

9. Sensor nach einem der voranstehenden Ansprüche, **dadurch gekennzeichnet, dass** an dem Lagerbereich jeweils zwei Detektionseinheiten zur Erfassung einer Lageänderung in einer Richtung angeordnet sind.

10. Sensor nach einem der voranstehenden Ansprüche, **dadurch gekennzeichnet, dass** die Befestigungsstruktur eine Federanordnung (2) umfasst, die in Richtung der zu erfassenden Beschleunigungen auslenkbar und im Übrigen im Wesentlichen biegesteif ist.

11. Sensor nach einem der voranstehenden Ansprüche, **dadurch gekennzeichnet, dass** die Detektionseinheit ein aus Elektrodenkämmen (6, 7a, 7b) gebildeter Differentialkondensator (15) ist.

12. Sensor nach einem der voranstehenden Ansprüche, **dadurch gekennzeichnet, dass** er als mikroelektromechanisches Bauteil aus einem Wafer, vorzugsweise einem Siliziumwafer, hergestellt wurde.

## Claims

1. A sensor for detecting an acceleration acting on the sensor, comprising:
a substrate (3),
a mass unit (9) acting as an inertial mass in the presence of an acceleration,
a support structure (2, 1, 5), jointly coupling the mass unit to the substrate, wherein the mass unit
- is jointly connected to the substrate such that at least one pivot axis (y;z) is defined around which the mass unit can perform a rotation relative to the substrate due to an acceleration acting on the sensor, and
- comprises a centre of gravity (4) offset from the respective pivot axis,
and at least one detection unit (11; 15), with which a change in position between the mass unit and the substrate is detectable,
**characterized in that**
the mass unit comprises a bearing area (1) in a cavity (12), the bearing area (1) being axis-symmetrically formed with respect to each pivot axis, and on which the support structure and at least one detection unit are disposed, wherein the bearing area and the mass unit are connected to each other by means of a rigid rod shaped or bar shaped element (5), the longitudinal axis of which coincides with a pivot axis (17), and
the detection unit is positioned with respect to the mass unit such that a deformation of the mass unit is not transferable to the detection unit.

2. The sensor according to claim 1, **characterized in that** the mass unit is constituted by a disc-like element.

3. The sensor according to claims 1 or 2, **characterized in that** the mass unit is axis-asymmetrically formed with respect to each pivot axis.

4. The sensor according to any of the preceding claims, **characterized in that** it comprises at least one detection unit with which a change in position between the mass unit and the substrate caused by an acceleration of the sensor acting in a first direction is detectable, and at least one further detection unit with which a change in position between the mass unit and the substrate caused by an acceleration of the sensor acting along a second direction is detectable.

5. The sensor according to any of the preceding claims, **characterized in that** at least one detection unit is arranged on the mass unit centrally on the edge (14a; 14b) surrounding the cavity.

6. The sensor according to claim 5, **characterized in that** said detection unit serves for detecting changes in position in the plane of the mass unit.

7. The sensor according to any of the preceding claims, **characterized in that** the at least one detection unit disposed at the bearing area (1) serves for detecting changes in position orthogonal to the plane of the mass unit.

8. The sensor according to any of the preceding claims, **characterized in that** the support structure is positioned on the substrate such that an intersection of two mutually orthogonal pivot axes (17, 18) defines an anchor point around which the mass unit is rotatable according to two degrees of freedom.

9. The sensor according to any of the preceding claims, **characterized in that** two detection units for detecting a change in position in one direction are provided on the bearing area.

10. The sensor according to any of the preceding claims, **characterized in that** the support structure comprises a spring assembly (2) that is displaceable along the direction of accelerations to be detected and that is otherwise substantially bend resistant.

11. The sensor according to any of the preceding claims, **characterized in that** the detection unit is a differential capacitor (15) formed from electrode combs (6, 7a, 7b).

12. The sensor according to any of the preceding claims, **characterized in that** it is formed as a micromechanical device from a wafer, preferably from a silicon wafer.

## Revendications

1. Capteur pour détecter une accélération agissant sur le capteur, présentant:
un substrat (3),
une unité de masse (9) faisant office de masse d'inertie en présence d'une accélération,
une structure de fixation (2, 1, 5), au moyen de laquelle l'unité de masse est articulée au substrat,
dans lequel l'unité de masse
- est articulée au substrat de telle manière que soit défini au moins un axe de pivotement (y; z), autour duquel l'unité de masse peut accomplir une rotation par rapport au substrat sous l'effet d'une accélération agissant sur le capteur, et
- présente un centre de gravité d'inertie (4) éloigné de l'axe de pivotement correspondant,
et au moins une unité de détection (11; 15), avec laquelle un changement de position entre l'unité de masse et le substrat peut être détecté,
**caractérisé en ce que**
- l'unité de masse présente une région d'appui (1) de forme axisymétrique par rapport à chaque axe de pivotement et disposée dans une découpe (12) de l'unité de masse, sur laquelle la structure de fixation et au moins une unité de détection sont disposées, dans lequel la région d'appui et l'unité de masse sont reliées l'une à l'autre au moyen d'un élément rigide en forme de barre ou de poutre (5), dont l'axe longitudinal coïncide avec un axe de pivotement (17), et
- l'unité de détection est disposée par rapport à l'unité de masse de telle manière qu'une déformation de l'unité de masse ne puisse pas être transmise à l'unité de détection.

2. Capteur selon la revendication 1, **caractérisé en ce que** l'unité de masse est formée par un élément en forme de disque.

3. Capteur selon la revendication 1 ou 2, **caractérisé en ce que** l'unité de masse est de forme axi-asymétrique par rapport à chaque axe de pivotement.

4. Capteur selon l'une quelconque des revendications précédentes, **caractérisé en ce qu'**il présente au moins une unité de détection, qui permet de détecter un changement de position entre l'unité de masse et le substrat résultant d'une accélération du capteur agissant dans une première direction, et au moins une autre unité de détection, qui permet de détecter un changement de position entre l'unité de masse et le substrat résultant d'une accélération du capteur agissant dans une deuxième direction.

5. Capteur selon l'une quelconque des revendications précédentes, **caractérisé en ce qu'**au moins une unité de détection est disposée sur l'unité de masse au milieu sur le bord (14a; 14b) entourant la découpe.

6. Capteur selon la revendication 5, **caractérisé en ce que** ladite unité de détection est destinée à détecter des changements de position dans le plan de l'unité de masse.

7. Capteur selon l'une quelconque des revendications précédentes, **caractérisé en ce que** ladite au moins une unité de détection disposée sur la région d'appui (1) est destinée à détecter des changements de position en direction orthogonale au plan de l'unité de masse.

8. Capteur selon l'une quelconque des revendications précédentes, **caractérisé en ce que** la structure de fixation est disposée sur le substrat, de façon à définir, par une intersection de deux axes de pivotement (17, 18) orthogonaux l'un à l'autre, un point d'ancrage autour duquel l'unité de masse peut tourner avec deux degrés de liberté.

9. Capteur selon l'une quelconque des revendications précédentes, **caractérisé en ce que** deux unités de détection sont respectivement disposées dans la région d'appui afin de détecter un changement de position dans une direction.

10. Capteur selon l'une quelconque des revendications précédentes, **caractérisé en ce que** la structure de fixation comprend un agencement de ressorts (2), qui est déformable dans la direction de l'accélération à détecter et qui est par ailleurs essentiellement rigide à la flexion.

11. Capteur selon l'une quelconque des revendications précédentes, **caractérisé en ce que** l'unité de détection est un condensateur différentiel (15) formé de peignes d'électrode (6, 7a, 7b).

12. Capteur selon l'une quelconque des revendications précédentes, **caractérisé en ce qu'**il a été fabriqué sous forme de composant micro-électromécanique à partir d'une galette, de préférence une galette de silicium.
